# EUROPÄISCHE PATENTANMELDUNG

(11) **EP 2 548 716 A2**
(43) Veröffentlichungstag der Anmeldung: **23.01.2013**
(21) Anmeldenummer: 12401155.2
(22) Anmeldetag: 17.07.2012
(51) Int. Cl.: B29C 65/20, B29C 65/78

(54) **Schweißverfahren und Vorrichtung zu seiner Durchführung**

(30) Priorität: 19.07.2011 DE 102011051944; 08.03.2012 DE 102012101977
(71) Anmelder: Breuer, Thomas, 82549 Königsdorf (DE)
(72) Erfinder: Breuer, Thomas, 82549 Königsdorf (DE)
(74) Vertreter: Mischung, Ralf

(57) **Zusammenfassung**

Verfahren zum Kunststoffschweißen mittels zweier voneinander unabhängig bewegbarer Positioniereinheiten (P1, P2), um ein Heizelement (H) unabhängig von einem Schweißteil (S) bewegen zu können, wobei ein Kraftsensor (F1) zur Ermittlung der auf das Heizelement (H) wirkenden Kräfte und zu deren Auswertung für die Bewegungssteuerung der Einheiten vorgesehen ist, und wobei ein vorzugsweise an einer ersten Positioniereinheit (P1) angeordnetes Positionserkennungssystem (D) Lagedaten über die Schweißstelle der anderen Positioniereinheit (P2) bereitstellt, um deren Bewegung abhängig davon zu steuern.

## Beschreibung

Die vorliegende Erfindung betrifft ein Verfahren zum Verschweißen von Kunststoffteilen nach Anspruch 1 sowie ein Schweißsystem und eine Fertigungsstraße zur Durchführung des Verfahrens nach Anspruch 10 und 16.

Das Verschweißen von zwei Kunststoffteilen miteinander ist aus dem Stand der Technik in verschiedenen Varianten bekannt. So werden beispielsweise in der Fahrzeugtechnik Kraftstofftanks mit Stutzen und Nippeln verschweißt, um Verbindungsleitungen oder Schläuche an den Tank anschließen zu können. Dabei wird die Verbindungsstelle am Tank (im weiteren allgemein "Körper") durch Kontakt mit einem aufgeheizten Heizelement zunächst angeschmolzen (plastifiziert). Vorzugsweise gleichzeitig wird auch der anzuschweißende Nippel (im weiteren allgemein "Schweißteil") an einer für die Schweißverbindung vorgesehenen Zone angeschmolzen, was ebenfalls durch ein Heizelement geschieht. Schweißteil und Körper werden nach Entfernen des oder der Heizelemente dann unmittelbar miteinander in Kontakt gebracht und gegebenenfalls mit einem gewissen Andruck zusammengefügt, wobei sich nach Abkühlen und Aushärten der plastifizierten Zone eine stabile Schweißverbindung ergibt.

Die aus dem Stand der Technik dafür bekannten Vorrichtungen sind kompakte Heizelementschweißeinheiten, welche ein Heizelement und das Schweißteil gemeinsam tragen und beide meist in einer gradlinigen Bewegung dem Körper zustellen können. Zunächst wird dabei das Heizelement gegen die Verbindungsstelle am Körper gefahren, um diese anzuschmelzen. Das ebenfalls von der Heizelementschweißeinheit geführte Schweißteil kann dabei gegen die dem Körper abgewandte Rückseite des Heizelements bewegt werden, um ebenfalls angeschmolzen zu werden. Danach wird das Heizelement um ein Maß vom Körper zurückgezogen und auch das Schweißteil wird in einer vorzugsweise linearen Bewegung von der Rückseite des Heizelements fortbewegt, um das Heizelement zwischen Schweißteil und Körper seitlich herausfahren zu können. Sodann wird das angeschmolzene Schweißteil dem Körper unmittelbar zugestellt und verbindet sich an der zuvor durch das Heizelement angeschmolzenen Verbindungsstelle mit dem Körper.

Derartige Vorrichtungen haben aber eine Reihe von Nachteilen. So ist die exakte Ausrichtung der gesamten Heizelementschweißeinheit relativ zum Körper bzw. zur Verbindungsstelle von besonderer Bedeutung, um die Verbindungsstelle gleichmäßig und korrekt anschmelzen zu können. Daher muss die gesamte Einheit (Heizelement, Spannzange zur Aufnahme des Schweißteils, Werkzeugschlitten zur Bewegung des Schweißteils, Heizelementschlitten zur Bewegung des Heizelements, weitere Führungen und Lager) an der Verbindungsstelle passend ausgerichtet werden. Da die Verbindungsstellen bei einer großen Stückzahl an sich gleicher Körper fertigungsbedingten Lagetoleranzen unterworfen sind, müsste die Heizelementschweißeinheit für jeden Körper bzw. jede Verbindungsstelle neu ausgerichtet werden. Dies ist aufgrund der schweren, diverse Komponenten umfassenden Einheit kaum möglich. Ein weiteres Problem besteht darin, dass der Körper beim Anschmelzen der Verbindungsstelle unterschiedlich nachgiebig reagiert. Die ausschließlich Lage-gesteuerte Positionierung des Heizelements (Soll-Position im Raum) kann diese Nachgiebigkeiten nicht berücksichtigen, so dass die wiederholte Positionierung des Heizelements an den Verbindungsstellen aufeinanderfolgender Körper zu unterschiedlichen Plastifizierungsergebnissen führt, selbst wenn das Heizelement dabei im Raum jeweils die gleiche Position einnimmt.

Dieses Problem besteht gleichzeitig auch für das Schweißteil, welche je nach Andruckkraft gegen das Heizelement unterschiedlich stark angeschmolzen wird, dieser Umstand aber bei den herkömmlichen Heizelementschweißeinheiten keine Berücksichtigung findet.

Schließlich sind die bekannten Heizelementschweißeinheiten wenig flexibel, denn für das Verschweißen unterschiedlicher Schweißteile an unterschiedlichen Körpern ist jeweils eine separate Schweißeinheit notwendig. Mitunter müssen ganze Einheiten bei unterschiedlichen Fahrzeugmodellen ersetzt werden, da die vorherige Heizelementschweißeinheit auf die Verschweißung eines bestimmten Schweißteils an einem bestimmten Körper ausgelegt und dimensioniert, also darauf begrenzt war.

Aufgabe der Erfindung war es daher, ein flexibles Verfahren und passende Vorrichtungen zum Verschweißen von Kunststoffteilen anzubieten, um zugleich die Qualität der Schweißverbindung zu verbessern.

Die Aufgabe wird gelöst durch ein Verfahren nach Anspruch 1, ein Schweißsystem nach Anspruch 10 und eine Fertigungsstraße nach Anspruch 16.

Die Erfindung geht zunächst von der Erkenntnis aus, dass die Qualität der Schweißverbindung erheblich verbessert werden kann, wenn das Anschmelzen des Körpers an der Verbindungsstelle mittels des Heizelements erfolgt unter Berücksichtigung derjenigen Kräfte, die dabei aus dem Andrücken des Heizelements gegen den Körper resultieren. In dem erfindungsgemäßen Verfahren soll daher die Kraft ermittelt werden, mit welcher das Heizelement zum Anschmelzen gegen die Verbindungsstelle des Körpers drückt, um so auf ein Nachgeben der Verbindungsstelle aufgrund ihrer Plastifizierung bzw. Elastizität reagieren zu können. Damit kann das Heizelement in Abhängigkeit von der Nachgiebigkeit des Körpers an der Verbindungsstelle schneller oder weniger schnell bis in seine Sollposition oder eine von der Kraftauswertung bestimmte Position verfahren werden. Durch die erfindungsgemäße Berücksichtigung der Kräfte zwischen Heizelement und Körper beim Anschmelzen kann die Bewegung des Heizelements besser auf mögliche Fertigungstoleranzen abgestimmt werden mit dem Ziel, die Verbindungsstelle mit wiederholbarer Genauigkeit hinsichtlich Lage, Temperatur und Plastifizierungsgrad herzustellen.

Damit umfasst das erfindungsgemäße Verfahren zum Verschweißen eines Schweißteils an einen Körper zumindest die folgenden Schritte:
a) Positionierung eines Heizelements an der Verbindungsstelle, um diese zu erwärmen,
b) Positionierung des Schweißteils an der erwärmten Verbindungsstelle zur Herstellung der Verschweißung,
c) Positionierung des Heizelements unter Berücksichtigung derjenigen Kräfte, welche dabei aus dem Andrücken des Heizelements gegen den Körper resultieren.

Üblicherweise wird auch das Schweißteil vor der Verbindung mit dem Körper erwärmt bzw. plastifiziert. Im Stand der Technik (Heizelementschweißeinheit) geschieht dies bisher durch Kontaktierung des Schweißteils mit demselben Heizelement (beispielsweise seiner Rückseite), mit dem auch die Plastifizierung des Körpers an der Verbindungsstelle erzeugt wird. Grundsätzlich ist diese Vorgehensweise auch für das erfindungsgemäße Verfahren denkbar, so lange ein möglicher Einfluss auf die Kräfte zwischen Heizelement und Verbindungsstelle dabei berücksichtigt wird. Als zweckmäßig hat sich jedoch eine Alternative erwiesen, bei der das Schweißteil an einer von dem vorgenannten Heizelement separaten Heizvorrichtung erwärmt und plastifiziert wird. Dadurch lassen sich Kräfteüberlagerungen am (sonst einzigen) Heizelement und daraus resultierende Einflüsse auf die Qualität der Plastifizierung an der Verbindungsstelle sicher vermeiden.

In Weiterbildung des erfindungsgemäßen Verfahrens sieht eine Ausführungsform vor, dass auch die Positionierung des Schweißteils an der Verbindungsstelle des Körpers erfolgt unter Berücksichtigung derjenigen Kräfte, welche dabei aus dem Andrücken des Schweißteils gegen den Körper resultieren. Analog zu den vorstehenden Betrachtungen hängt die Qualität der Schweißverbindung auch davon ab, welche Kräfte zwischen dem Körper und dem Schweißteil beim Fügen beider Komponenten auftreten. Ohne Berücksichtigung dieser Fügekräfte wird das Schweißteil beim Fügen stets in eine vorgegebene räumliche Sollposition am Körper gebracht in der Annahme, das Schweißteil habe hier den idealen Kontakt mit der plastifizierten Verbindungsstelle zur Ausbildung einer optimalen Schweißverbindung. Je nach Grad der Plastifizierung von Verbindungsstelle und Schweißteil im Moment des Fügen kann es jedoch zweckmäßig sein, die beiden Komponenten mit geringerer oder höherer Kraft gegeneinander zu drücken oder es kann sich nach Auswertung der Kräfte und der aktuellen Positionsdaten des Schweißteils herausstellen, dass eine ordnungsgemäße Schweißverbindung nicht hergestellt werden kann oder nicht hergestellt wurden. Somit dient die Überwachung der Kräfte am Heizelement in Verbindung mit der Überwachung der Kräfte am Schweißteil der Ausbildung einer qualitativ besonders hochwertigen Schweißverbindung.

Unter den erfassten "Kräften" sollen auch Momente verstanden sein, die beim Plastifizieren der Verbindungstelle bzw. beim Fügen des Schweißteils am Heizelement bzw. am Schweißteil auftreten und ebenfalls erfindungsgemäß berücksichtigt werden sollen. So könnte ein Schweißteil an einer bspw. kreisförmigen Plastifizierungszone versehentlich nur einseitig oder über den Umfang zumindest ungleichmäßig plastifiziert worden sein. Beim Fügen lässt es sich mit der stärker plastifizierten Zone leichter in die Verbindungsstelle einsetzen, so dass das Schweißteil oder eine dieses haltende Spannzange dadurch ein Biegemoment erfährt. Unter Berücksichtigung dieses Biegemomentes kann die Bewegung und/oder die Ausrichtung des Schweißteils erfindungsgemäß sofort korrigiert werden. Durch Auswertung der beim Fügevorgang anfallenden und/oder messbaren Daten (Temperatur, Fügezeit, Füge- bzw. Vorschubgeschwindigkeit, Lage des Schweißteils im Raum, Fügekräfte und - momente) lässt sich anhand vorgebbarer Auswertekriterien eine zuverlässige Aussage über die Qualität der Schweißverbindung machen.

Natürlich können die Kräfte am Schweißelement nicht nur während des Fügevorgangs berücksichtigt werden, sondern auch bei der vorhergehenden Plastifizierung des Schweißteils am Heizelement oder einer separaten Heizvorrichtung, um auch hier ein verbessertes Plastifizierungsergebnis unabhängig von Fertigungs-, Positionierungs- oder Schmelztemperaturtoleranzen erzielen zu können.

Eine besonders vorteilhafte und flexible Form des erfindungsgemäßen Verfahrens wird dadurch ausgeführt, dass das Heizelement mittels einer ersten Positioniereinheit und das Schweißteil mittels einer von der ersten Positioniereinheit unabhängig bewegbaren zweiten Positioniereinheit aufnehmbar und bewegbar ist. Durch diese Maßnahme werden gegenüber den bisher bekannten Verfahren mehrere Vorteile erzielt.

Zunächst ist die Bewegung des Schweißteils nicht mehr an die Bewegung des Heizelements gekoppelt, so wie dies bei herkömmlichen Heizelementschweißeinheiten der Fall ist. Stattdessen lässt sich das Schweißteil unabhängig vom Heizelement frei im Raum bewegen, wodurch die Qualität der Schweißverbindung nochmals verbessert wird, wie im Folgenden zu sehen sein wird.

Beim Stand der Technik waren die Bewegungen des Heizelements und des Schweißteils aufgrund der mechanischen Kopplung (gemeinsame Heizelementschweißeinheit) voneinander abhängig, auch in zeitlicher Hinsicht. Die erfindungsgemäß nun gegebene getrennte Bewegbarkeit von Schweißteil und Heizelement erlaubt insbesondere die zeitlich optimierte Abstimmung der einzelnen Bewegungen. So kann beispielsweise das gerade plastifizierte Schweißteil bereits frei im Raum in Richtung auf die Verbindungsstelle bewegt werden, noch während diese durch das Heizelement angeschmolzen wird. Zugleich kann sichergestellt werden, dass das Heizelement dennoch rechtzeitig von der Verbindungsstelle fortbewegt wird, um nicht mit dem herannahenden Schweißteil zu kollidieren. Dieses kann ohne unnötige Verzögerung dann in die bis kurz zuvor angeschmolzene Verbindungsstelle eingesetzt werden, während der Heizspiegel beispielsweise in eine Ausgangsposition zurückverfahren wird. Dadurch wird Fertigungszeit eingespart und ungewollte Abkühlung der angeschmolzenen Zonen vor dem Fügen weitgehend vermieden.

Ein weiterer signifikanter Vorteil der getrennten Bewegungen von Schweißteil und Heizelement liegt darin, dass die zuvor beschriebenen Kräfte vollkommen unabhängig voneinander für das Schweißteil und das Heizelement erfasst und verarbeitet werden können, wenn jede der beiden Positioniereinheiten die vorbeschriebenen Mittel zur Erfassung der Kräfte aufweist. Das Problem von Kräfteüberlagerung am Heizelement (beispielsweise durch Plastifizierungskontakt mit dem Körper einerseits und dem rückwärtig am Heizelement zu plastifizierenden Schweißteil andererseits) kann dadurch vermieden werden.

Ein weiterer besonderer Vorteil der getrennten Bewegungsführung von Schweißteil und Heizelement zeigt sich nach einer wiederum verbesserten Verfahrensvariante. Danach ist vorgesehen, dass vor der Positionierung des Heizelements am Körper die Lage der Kontur des Körpers an der Verbindungstelle durch ein Positionserkennungssystem erfasst und ausgewertet wird. Hintergrund dieser Variante ist der Umstand, dass die Verbindungsstellen einzelner Körper fertigungsbedingt oder durch Aufspannfehler oft von einer Soll-Lage abweichen und beispielsweise um einige Grad im Raum schief zur Soll-Lage liegen. Wird diese Lageabweichung nicht berücksichtigt, so wird das Heizelement im Rahmen des automatisierten Prozesses nicht bündig, sondern entsprechend der Abweichung leicht verkippt auf die Verbindungsstelle aufgesetzt, mit der Folge einer asymmetrischen und ungleichmäßigen Plastifizierung. Zwar lässt die erfindungsgemäß vorgesehene Kontrolle der Andruckkräfte eine Korrektur der Bewegungen und Ausrichtung des Heizelements zu, diese kann jedoch erst während des Anschmelzvorgangs greifen. Die Positionserkennung dagegen soll dazu dienen, die tatsächliche Lage der Verbindungsstelle am Körper bzw. im Raum zu erfassen, um die Ausrichtung des Heizelements noch vor Beginn der Plastifizierung der Verbindungsstelle an diese tatsächliche Lage anzupassen. Dadurch wird sichergestellt, dass das Heizelement stets in optimaler Ausrichtung bzw. bündig zur anzuschmelzenden Verbindungsstelle an diese angelegt bzw. angedrückt wird, um eine möglichst gleichmäßige Plastifizierung auch für voneinander abweichend ausgerichtente Verbindungsstellen zu gewährleisten.

Zweckmäßigerweise kann das Positionserkennungssystem an derjenigen Positioniereinheit angeordnet sein, welche das Heizelement trägt und bewegt, um die Lageerfassung der Verbindungsstelle bereits im Rahmen der Annäherungsbewegung des Heizelements an die Verbindungsstelle durchzuführen. Dann können die LageDaten in der entsprechenden Positioniereinheit oder einer übergeordneten Steuerung zur darauf abgestimmten Anpassung der Ausrichtung und Bewegung des Heizelements führen.

Das Positionserkennungssystem (oder eine zusätzlich vorgesehene Komponente) kann außer der Erkennung der Lage der Kontur des Körpers an der Verbindungstelle auch die Erkennung des Körpers selber vornehmen. So lässt sich für eine bestimmte Art von Körper (bspw. Typ K₁) sofort die Anzahl bzw. Art und Lage der anzubringenden Schweißteile aus einer in einer Datenbank oder Steuereinheit hinterlegten Zuordnungstabelle bestimmen. Erkennt das Positionserkennungssystem dagegen einen Körper von bspw. Typ K₂, so die gelten entsprechend andere Vorgaben für die Auswahl und Positionierung der Schweißteile. Jede Art von Kennzeichnung, die mittels des Positionserkennungssystems ausgelesen werden kann, ist zur Kennzeichnung der Körper geeignet. Denkbar ist sogar, die Form des Körpers selber als charakteristisches Kennzeichnungsmerkmal zu verwenden, so dass eine separate Kennzeichnung, etwa mittels Barcode, entfallen kann.

Der besondere Vorteil der für das Schweißteil und das Heizelement getrennt vorgesehenen Positioniereinheiten liegt darin, dass die von dem Positionserkennungssystem ermittelten Ist-Daten der Verbindungsstelle (oder auch die davon abhängigen Positionierdaten des Heizelements während des Plastifizierungsvorgangs an der Verbindungsstelle) an die zweite Positioniereinheit übertragen werden können, um das von ihr bewegte Schweißteil ebenfalls korrekt und gegebenenfalls in seiner Lage korrigiert der Verbindungsstelle zuzuführen (zwar wird ein nach dem Stand der Technik mechanisch mit dem Heizelement gekoppeltes Schweißteil die Korrekturbewegung des Heizelements gleichfalls mitvollziehen, das System würde jedoch die Möglichkeit der getrennten Kräftekontrolle und insbesondere die Flexibilität hinsichtlich unterschiedlicher Schweißteile - siehe unten - einbüßen). Die jeweils für das Schweißteil und das Heizelement vorgesehene Kraftkontrolle bei jeweils separater Bewegbarkeit und in Verbindung mit der Positionserkennung der Verbindungsstelle bietet alle Mittel für ein außerordentlich flexibles und zugleich schnelles und genaues Schweißverfahren.

Das erfindungsgemäße Verfahren erlaubt einen weiteren vorteilhaften Verfahrensschritt zur Vorbereitung des Schweißvorgangs, der erhebliche Zeitersparnis bewirkt. Dabei wird, bevor eine Verbindungsstelle überhaupt plastifiziert wird, die an der zweiten Positioniereinheit angeordnete Haltevorrichtung zur Aufnahme des Schweißteils zunächst gezielt an den Ort der vorgesehenen Verbindungsstelle bewegt, um die dadurch eingenommene Position im Raum als "Sollposition" in einer Steuereinheit zu hinterlegen und den weiteren Bewegungen der Positioniereinheiten zugrunde zu legen. Auf diese Weise ist es relativ einfach möglich, die relative räumliche Lage der Haltevorrichtung zur Verbindungsstelle zu ermitteln bzw. festzulegen, was andernfalls nur durch separate Bestimmung/Messung der Lage des Körpers bzw. seiner Verbindungsstelle relativ zur Positioniereinheit bzw. der von ihr getragenen Haltevorrichtung und Eingabe dieser Daten in eine Steuereinheit möglich wäre. Statt dessen sieht der vorgenannte Verfahrensschritt vor, die Haltevorrichtung an den Ort der Verbindungsstelle zu verfahren bzw. zu bewegen, wobei die dabei eingenommene Position der Haltevorrichtung "auf Knopfdruck" als die für das Heizelement bzw. das Schweißteil im weiteren anzufahrende Sollposition definiert wird. Dazu werden die Koordinaten der einzelnen Achsen der Positioniereinheit von zugehörigen Positionssensoren erfasst bzw. aus der Steuerung der Positioniereinheit ausgelesen und in einer zugeordneten Steuereinheit abgespeichert, wenn die Haltevorrichtung ihre Sollposition eingenommen hat.

Einerseits wäre es möglich, die Haltevorrichtung in die Sollposition zu bewegen, in dem die einzelnen Achsen der Positioniereinheit zum Verfahren angesteuert und das Ergebnis jeweils visuell überprüft wird. Das könnte etwa mit Hilfe eines manuell zu bedienenden Joy-Sticks geschehen, der mit einer übergeordneten Steuereinheit bzw. mit der Positioniereinheit wirkungsmäßig so verbunden ist, dass die Bewegungen des Joy-Sticks zu räumlichen Bewegungen der von der Positioniereinheit an ihrer letzten Achse getragenen Haltevorrichtung führen. Der Bediener kann die so erzwungenen Bewegungen der Haltevorrichtung beobachten bzw. mit Hilfe des Joy-Sticks so kontrollieren, dass die Haltevorrichtung schließlich die gewünschte Soll-Position an dem Körper einnimmt. Die Steuerung der Bewegung der Positioniereinheit erfolgt hier also durch Eingabe von Signalen aus einem Joy-Stick oder auch einer Tastatur etc., welche in Antriebssignale für die einzelnen Achsen der Positioniereinheit umgesetzt werden.

Alternativ dazu nutzt ein besonders vorteilhaftes Verfahren zur Positionierung der Haltevorrichtung die an der Positioniereinheit vorgesehenen Kraftsensoren. Diese Sensoren, die - wie beschrieben - die auf das Schweißteil bzw. die zugehörige Haltevorrichtung einwirkenden Kräfte erfassen und einer übergeordneten Steuereinheit zuführen können, werden in dieser alternativen Verfahrensvariante zur "Eingabe" der gewünschten Verfahrbewegung verwendet. Dabei lässt sich die Positioniereinheit in einem besonderen Positioniermodus ("teach-in") im Raum bewegen bzw. führen, in dem die an ihr angeordnete Haltevorrichtung von der Hand des Bedieners gegriffen und bis in die Soll-Position gezogen und gegebenenfalls geschwenkt wird. Die Positioniereinheit folgt dabei den manuell auf sie einwirkenden "Befehlen", welche sie in Form von Signalen der Kraftsensoren erhält, und die von einer übergeordneten Steuereinheit in geeignete Steuersignale für die Achsen der Positioniereinheit umgewandelt werden. Beispielsweise würde der Bediener durch eine auf die Haltevorrichtung manuell ausgeübte horizontale Zugkraft einen oder mehrere Kraftsensoren mit Normal- oder Biegekräften beaufschlagen. Die von den Sensoren automatisch an die Steuereinheit übermittelten Signale werden von dieser so in Steuerungsbefehle für die Achsen der Positioniereinheit umgesetzt, dass die eingebrachten Kräfte reduziert werden, indem die Haltevorrichtung der vom Bediener manuell vorgegebenen Bewegungsrichtung folgt. Auf diese Weise lässt sich eine vorgesehene Verbindungsstelle am Körper sehr schnell und vor allem praktisch anfahren bzw. festlegen. Auch die (ggfls. geringfügige) Veränderung der Lage einer Verbindungsstelle, wie sie beispielsweise im Rahmen des Prototypenbaus häufig vorkommt, lässt sich auf diese Weise leicht vornehmen, wobei bei geeigneter Empfindlichkeit der Kraftsensoren manuelle Positionierungen bzw. Verschiebungen auch im Millimeterbereich möglich sind.

Die so eingegebenen bzw. hinterlegten Positionsdaten kann die Positioniereinheit mit dem von ihr getragenen Schweißteil anschließend "selbsttätig" anfahren. Auch die das Heizelement tragendende andere Positioniereinheit kann erfindungsgemäß auf diese Daten zugreifen und sie bspw. für die Positionierung des Heizelements an der Verbindungsstelle verwenden.

Die Positionierung des Schweißteils beim Fügen an der angeschmolzenen Verbindungsstelle des Körpers erfolgt zweckmäßigerweise unter Berücksichtigung von Korrekturdaten, die in Abhängigkeit von einer räumlichen Lage des Heizelements beim Anschmelzen der Verbindungsstelle oder von der räumlichen Lage der Kontur des Körpers an der Verbindungsstelle vor oder nach dem Anschmelzen ermittelt werden. Damit kann das Schweißteil entweder ausgehend von der ursprünglich ermittelten Ist-Lage der Verbindungsstelle ausgerichtet werden, oder es kann die Lage des Heizelements zugrunde gelegt werden, welche dieses während des Anschmelzens der Verbindungsstelle oder unmittelbar vor Entfernung des Heizelements von der Verbindungsstelle eingenommen hatte. Im letzteren Fall wird vorteilhaft berücksichtigt, dass die Oberfläche der Verbindungsstellen durch die Plastifizierung noch um ein geringes Maß verformt werden kann gegenüber der vor der Plastifizierung durch das Detektionserkennungssystem erfassten Lage. Die Endlage des Heizelements unmittelbar vor Beendigung der Plastifizierung gibt möglicherweise die genauesten Lagedaten der angeschmolzenen Verbindungsstelle für die darauffolgende Positionierung des Schweißteils. Selbstverständlich ist auch die Bildung von Mittelwert und Toleranzen innerhalb einer Steuereinheit dankbar, um die Positionierung des Schweißteils und des Heizelements relativ zur Lage der Verbindungsstelle zu jedem Zeitpunkt des Schweißverfahrens zu optimieren.

Eine besonders bevorzugte Ausführungsform des erfindungsgemäßen Verfahrens umfasst demnach folgende Verfahrensschritte:
i) Erfassen der Lage der Kontur des Körpers (K) an der Verbindungsstelle (V) durch ein Positionserkennungssystem (D);
ii) Positionieren des Heizelements (H) an der Verbindungsstelle (V) mittels einer ersten Positioniereinheit (P₁) unter Anpassung der räumlichen Ausrichtung des Heizelements auf Basis der ermittelten Lage der Kontur an der Verbindungsstelle (V);
iii) Erfassen der vom Körper (K) auf das Heizelement (H) einwirkenden Kraft und Steuerung der weiteren Bewegung des Heizelements (H) in Abhängigkeit dieser Kraft, um eine ausreichend aufgewärmte und angeschmolzene Verbindungsstelle (V) an einer vorgebbaren Position am Körper (K) zu erreichen;
iv) Entfernen des Heizelements (H) von der Verbindungsstelle (V) und Positionierung des Schweißteils (S) mittels einer zweiten Positioniereinheit (P₂) an der Verbindungsstelle (V) unter Berücksichtigung von zuvor ermittelten Lagedaten der Verbindungsstelle (V);
v) Erfassen der vom Körper (K) auf das Schweißteil (S) einwirkenden Kraft und Steuerung der weiteren Bewegung des Schweißteils (S) in Abhängigkeit dieser Kraft, um die Schweißverbindung herzustellen, wobei das Schweißteil (S) vor Schritt iv) an einer separaten Heizvorrichtung angeschmolzen wird.

Ein Schweißsystem zur Ausführung des erfindungsgemäßen Verfahrens umfasst dabei eine erste Positioniereinheit zur Aufnahme und Positionierung wenigstens eines Heizelements, um mit dem Heizelement die Verbindungsstelle zu erwärmen bzw. anzuschmelzen (plastifizieren). Weiterhin ist eine von der ersten Positioniereinheit unabhängig bewegbare zweite Positioniereinheit vorgesehen, welche der Aufnahme und Positionierung wenigstens eines Schweißteils dient. Bei den Positioniereinheiten kann es sich insbesondere um 5-oder 6-achsige Roboter handeln, welche mittels jeweils geeigneter Haltevorrichtungen (etwa Spannzangen) zur Aufnahme des Schweißteils bzw. des Heizelements ausgebildet sind.

Ferner umfasst das erfindungsgemäße Schweißsystem einen Kraftsensor zur Ermittlung von Kräften, welche auf das Heizelement einwirken und insbesondere aus dessen Kontakt mit dem Körper resultieren, so dass die mit dem Kraftsensor ermittelten Daten bei der Positionierung des Heizelements berücksichtigt werden können. Der zumindest für das Heizelement vorgesehene Kraftsensor sitzt vorzugsweise an derjenigen Roboterachse, welche unmittelbar das Heizelement trägt. So können Einflüsse von anderen Kräften, beispielsweise Gewichtskräfte nachgeschalteter Roboterachsen, vermieden werden.

Zweckmäßigerweise umfasst das erfindungsgemäße Schweißsystem auch an der zweiten Positioniereinheit einen Kraftsensor, um die auf das Schweißteil einwirkenden Kräfte zu ermitteln. Besonders interessant sind hier - wie für das Verfahren schon ausgeführt - die Fügekräfte beim Einsetzen des Schweißteils in die Verbindungsstelle oder auch die Andrückkräfte, die beim Plastifizieren des Schweißteils gegen das Heizelement oder eine separate Heizvorrichtung auftreten.

Die erste und zweite Positioniereinheit können zwei Roboter von ähnlichem Aufbau sein, wobei die erste Positioniereinheit zur Aufnahme des Heizelements ausgebildet ist, während die zweite Positioniereinheit beispielsweise eine oder mehrere Spannzangen aufweist, um damit das Schweißteil greifen zu können.

Nach einer weiteren vorteilhaften Ausführungsform des Schweißsystems umfasst dieses ein Positionserkennungssystem, welches vorzugsweise an der ersten Positioniereinheit angeordnet ist. Das Positionserkennungssystem soll die Lage der Kontur des Körpers an der Verbindungsstelle erfassen und auswerten oder die erfassten Daten zur Auswertung an eine übergeordnete Steuerung weiterleiten, um das Heizelement in Abhängigkeit der erfassten Kontur zur Erwärmung bzw. Anschmelzung der Verbindungsstelle optimal auszurichten. Zar kann das Positionserkennungssystem grundsätzlich auch losgelöst von beiden Positioniereinheiten an einer separaten Konstruktion angeordnet und gegebenenfalls bewegbar sein, um auch unterschiedliche Verbindungsstellen an unterschiedlichen Positionen für unterschiedliche Körper individuell erfassen zu können. Zweckmäßigerweise ist das Positionserkennungssystem jedoch gemeinsam mit dem Heizelement bewegbar, da dadurch eine zusätzliche Haltevorrichtung entfällt und das Heizelement (und damit zumindest ein Teil der ersten Positioniereinheit) zum Anschmelzen ohnehin in Richtung auf die Verbindungsstelle bewegt werden muss, was gleichermaßen für das Positionserkennungssystem gilt. Die Positionserkennung kann vorzugsweise optisch erfolgen, etwa durch lasergestützte Abtastung des Körpers bzw. der Verbindungsstelle. Auch bekannte Bilderkennungsverfahren können dazu herangezogen werden.

Die vorteilhafte Aufteilung des Schweißteils einerseits und des Heizelements andererseits auf zwei getrennte Positioniereinheiten bietet sich insbesondere für ein weiterentwickeltes Schweißsystem an. Dabei soll die erste Positioniereinheit erfindungsgemäß zur Aufnahme mehrerer Heizelemente ausgebildet sein, um den Körper mit unterschiedlichen Heizelementen anschmelzen zu können. Dies kann in Frage kommen für verschieden gestaltete Verbindungsstellen an einem Körper, die den Einsatz entsprechend verschieden geformter Heizelemente verlangen. Auch zu Wartungs- oder Austauschzwecken kann es sinnvoll sein, mehrere Heizelemente gleichzeitig für die erste Positioniereinheit vorzusehen. In Frage kommt beispielsweise eine sternartige Anordnung an der 5. oder 6. Achse eines Roboters. Jedes der einzelnen Heizelemente kann dann wahlweise zur Anschmelzung einer Verbindungsstelle am Körper bewegt werden, während die jeweils anderen Heizelemente beheizt oder unbeheizt mitgeführt werden. Alternativ denkbar ist auch eine Wechselvorrichtung zur Aufnahme unterschiedlicher Heizelemente aus einem Heizelementmagazin, wobei bei einem Wechsel der Heizelemente Aufwärmzeiten zu berücksichtigen sind. Alternativ können die im Heizelement-Magazin befindlichen Heizelemente auch dauerhaft mittels Energiezufuhr beheizt werden.

Alternativ oder ergänzend sieht ein erfindungsgemäßes Schweißsystem vor, dass auch die zweite Positioniereinheit zur Aufnahme mehrerer, vorzugsweise unterschiedlicher Schweißteile ausgebildet ist, um diese wahlweise an unterschiedlichen Verbindungsstellen des Körpers zu positionieren. Damit ergibt sich eine breite Vielfalt der Einsatzmöglichkeiten des Schweißsystems auch für unterschiedliche Körper und unterschiedliche Schweißteile.

An einem ersten Körper in Form eines Kraftfahrzeugtanks vom Typ A könnten an zwei verschiedenen Verbindungsstellen zwei unterschiedliche Nippel als Schweißteile angebracht werden, in dem ein erstes Heizelement die erste Verbindungsstelle entsprechend anschmilzt, wonach die zweite Positioniereinheit das vorgesehene und ebenfalls angeschmolzene Schweißteil dort einsetzt. Mit dem gleichen oder eventuell gewechselten Heizelement könnte dann die zweite Verbindungsstelle plastifiziert werden, während die zweite Positioniereinheit aus einem Schweißteilemagazin ein weiteres (anderes) Schweißteil entnimmt, zum Anschmelzen an eine separate Heizvorrichtung anlegt und schließlich an der zweiten Verbindungsstelle in den Tank einfügt.

Das gleiche Schweißsystem könnten anschließend einen anders geformten Kraftstofftank vom Typ B an beispielsweise drei verschiedenen Verbindungsstellen mit wiederum unterschiedlichen oder auch gleichen Schweißteilen bestücken, in dem die erforderlichen Heizelemente und Schweißteile aus jeweils bereitstehenden Magazinen von den einzelnen Positioniereinheiten aufgegriffen und verwendet bzw. eingesetzt werden. Im Gegensatz zum Stand der Technik, bei dem eine Heizelementschweißeinheit im Wesentlichen auf ein Heizelement, einen Körpertypen und ein Schweißelement beschränkt war, gestattet das erfindungsgemäße System die besonders flexible Verschweißung verschiedenster Schweißteil mit unterschiedlichen Körpern an unterschiedlichen Verbindungsstellen.

Auf Basis des vorgeschriebenen Verfahrens bzw. des vorbeschriebenen Schweißsystems erhöht sich die Flexibilität zum Verschweißen von Kunststoffteilen nochmals in einer Fertigungsstraße mit mehreren Schweißsystemen der vorgenannten Art. Die einzelnen Systeme können dabei parallel oder in Reihe hintereinander liegen und durch wenigstens einen Zubringer mit gleichen oder unterschiedlichen Körpern versorgt werden. Jedes Schweißsystem kann die auf den jeweils bereitgestellten Körper abgestimmten Schweißaufgaben ausführen, in dem es durch Auswahl des geeigneten Heizelements und des gewünschten Schweißteils an verschiedenen vorgegebenen Verbindungsstellen des Körpers die gewünschte Schweißverbindung herstellt. Die Fertigungsstraße kann beispielsweise mehreren Schweißsystemen gleichzeitig gleichartige Körper zur Verfügung stellen, wobei jedes System im Wesentlichen die gleichen Schweißarbeiten vornehmen kann.

Denkbar ist auch, dass jedes einzelne System an den gleichartigen Körpern an jeweils unterschiedliche Verbindungsstellen bedient, also dort schweißt. So könnte etwa Schweißsystem 1 an Verbindungsstelle 1, Schweißsystem 2 an Verbindungsstellen 2 und 3, Schweißsystem 3 an Verbindungsstellen 4 und 5 etc. schweißen. Jedoch können auch unterschiedliche Körper an mehreren oder einzelnen Schweißsystemen jeweils mit allen erforderlichen Schweißverbindungen versehen werden, also beispielsweise für den Körper nach Typ A alle Verbindungen an Schweißsystem 1, für den Körper nach Typ B alle Schweißverbindungen mit Schweißsystem 2 und für den Körper nach Typ C alle Schweißverbindungen mit Schweißsystem 3. Auch können die Schweißungen für einen Körper auf zwei oder mehr Schweißsysteme aufgeteilt werden.

Es wird deutlich, dass die unterschiedlichsten Kombinationen von Schweißteilen, Heizelementen und zu verschweißenden Körpern mit Hilfe einer solchen Fertigungsstraße nach Belieben herstellbar sind, ohne dass der Serienauslauf eines bestimmten Modells auch zur Entsorgung eines Schweißsystems führen müsste, da dieses erfindungsgemäß nicht nur auf ein bestimmtes Modell abgestimmt ist.

Nachfolgend soll eine Ausführungsform der Erfindung anhand der Figuren näher beschrieben werden. Dabei zeigt
- Fig. 1: eine Teilansicht eines Körpers mit daran anzuschweißendem Schweißteil;
- Fig. 2: eine nur teilweise dargestellte erste Positioniereinheit mit mehreren davon getragenen Heizelementen;
- Fig. 3: den vordersten Abschnitt einer zweiten Positioniereinheit mit mehreren Spannzangen für die Schweißteile und
- Fig. 4: eine schematische Darstellung einer Fertigungsstraße mit mehreren Schweißsystemen.

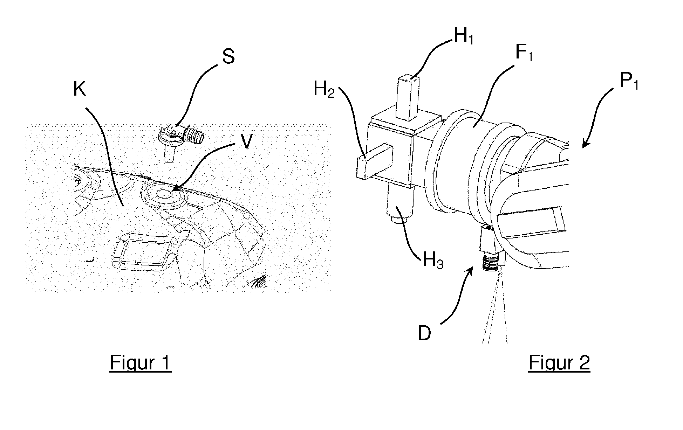

Fig. 1 zeigt den Ausschnitt eines Kunststofftanks, der als Körper (K) mit einem als Schweißteil (S) fungierenden Nippel an einer Verbindungsstelle (V) verschweißt werden soll. An dem Schweißteil können Verbindungsleitungen angeschlossen werden. Für den hier dargestellten Kraftstofftank ist eine qualitativ hochwertige Schweißverbindung unabdingbar.

In Fig. 2 ist ein Teil einer ersten Positioniereinrichtung (P₁) zu sehen. Die erste Positioniereinheit P₁ ist ein Roboter, der an seiner letzten Achse mehrere sternförmig angeordnete Heizelemente (H₁, H₂ , H₃) trägt. Die Heizelemente (H₁, H₂ , H₃) sind auf einem gemeinsamen Träger befestigt, der seinerseits von einem ersten Kraftsensor (F₁) getragen wird. Kräfte, welche auf die Heizelemente einwirken, werden von dem ersten Kraftsensor (F₁) erfasst und einer nicht dargestellten übergeordneten Steuereinheit zur Auswertung übermittelt.

Benachbart zum ersten Kraftsensor (F₁) ist ein Positionserkennungssystem (D) vorgesehen, welches ebenfalls von der ersten Positioniereinheit (P₁) getragen wird. Es dient der Erfassung von Oberflächenkonturen des Körpers (K), um die korrekte Ausrichtung der Heizelemente vornehmen zu können. Dazu ist das erste Positioniersystem (P₁) so über den in Fig. 1 dargestellten Körper (K) bewegbar, dass das Positionserkennungssystem (D) die Position und räumliche Ausrichtung (Lage) der Verbindungsstelle (V) erfassen und einer nicht dargestellten übergeordneten Steuereinheit zur Auswertung melden kann. Abhängig von den ausgewerteten Daten vermag die erste Positioniereinheit (P₁) beispielsweise das Heizelement (H₃) unter optimal angepasster Neigung auf die Verbindungsstelle (V) aufzusetzen, um diese zu erwärmen und anzuschmelzen. Das in Fig. 1 gezeigte Schweißteil (S) befindet sich dabei außerhalb der Bewegungsbahn der ersten Positioniereinheit (P₁).

Während des Anschmelzvorgangs können die von dem ersten Kraftsensor (F₁) aufgenommenen Kontaktkräfte zwischen dem Heizelement (H₃) und der Verbindungsstelle (V) ebenfalls ausgewertet und zur weiteren Steuerung der Bewegung des Heizelements (H₃) berücksichtigt werden, um die Verbindungsstelle (V) optimal zu belasten bzw. anzuschmelzen.

Nach erfolgter Anschmelzung bzw. Plastifizierung der Verbindungsstelle (V) wird der in Fig. 2 dargestellte Arm der ersten Positioniereinheit P₁ mit dem Heizelement (H₃) von der Verbindungsstelle (V) wegbewegt, um das Fügen des Schweißteils (S) zu ermöglichen.

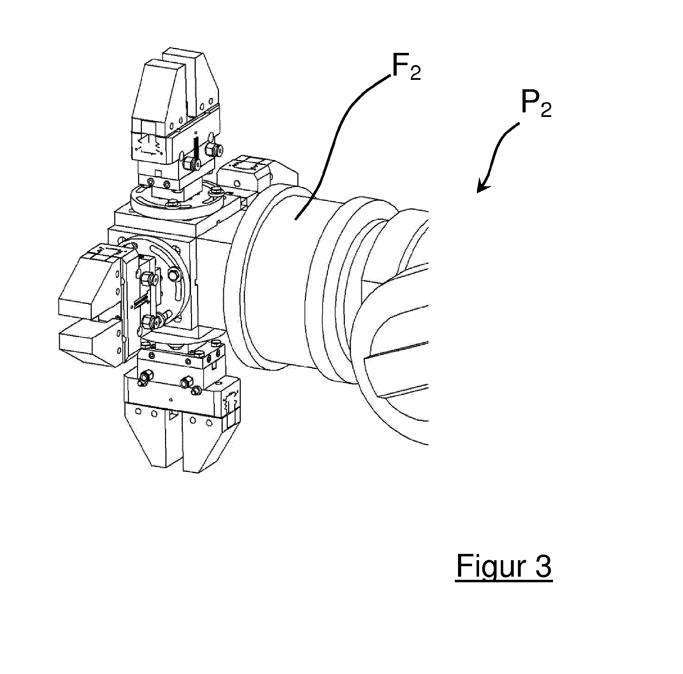

In Fig. 3 ist ein Teil einer zweiten Positioniereinheit (P₂) gezeigt, bei der sich ebenfalls um einen Roboter handeln kann. Die zweite Positioniereinheit (P₂) trägt am dargestellten Arm eine mit mehreren Spannzangen versehene Halterung, wobei jede Spannzange zur temporären Aufnahme eines in Fig. 3 nicht näher dargestellten Schweißteils (S) ausgebildet ist. Die Halterung mit den Spannzangen wird von einem zweiten Kraftsensor (F₂) getragen, der analog zur Ausführung an der ersten Positioniereinheit (P₁) die auf die Spannzangen bzw. Schweißteile einwirkenden Kräfte einer übergeordneten Steuerung signalisiert, um die Bewegung des Schweißteils unter Berücksichtigung dieser Kräfte vornehmen zu können.

Nach der zuvor beschriebenen Plastifizierung der Verbindungsstelle (V) am Körper (K) kann ein von einer Spannzange aufgenommenes Schweißteil S durch Bewegung der zweiten Positioniereinheit (P₂) in die in Fig. 1 dargestellte Verbindungsstelle (V) eingesetzt werden. Die Positionierung erfolgt dabei unter Berücksichtigung der durch das Positionserkennungssystem (D) gewonnenen Lagedaten der Verbindungsstelle und unter Berücksichtigung der vom zweiten Kraftsensor (S₂) übermittelten Daten, um das Schweißteil (S) mit der optimalen Kraft bzw. Geschwindigkeit in die Zielposition an der Verbindungsstelle (V) einzusetzen. Die erste Positioniereinheit (P₁) kann dabei unabhängig von der zweiten Positioniereinheit (P₂) bewegt werden, wobei eine gemeinsame übergeordnete Steuerung die Kollision beider Einheiten ausschließt.

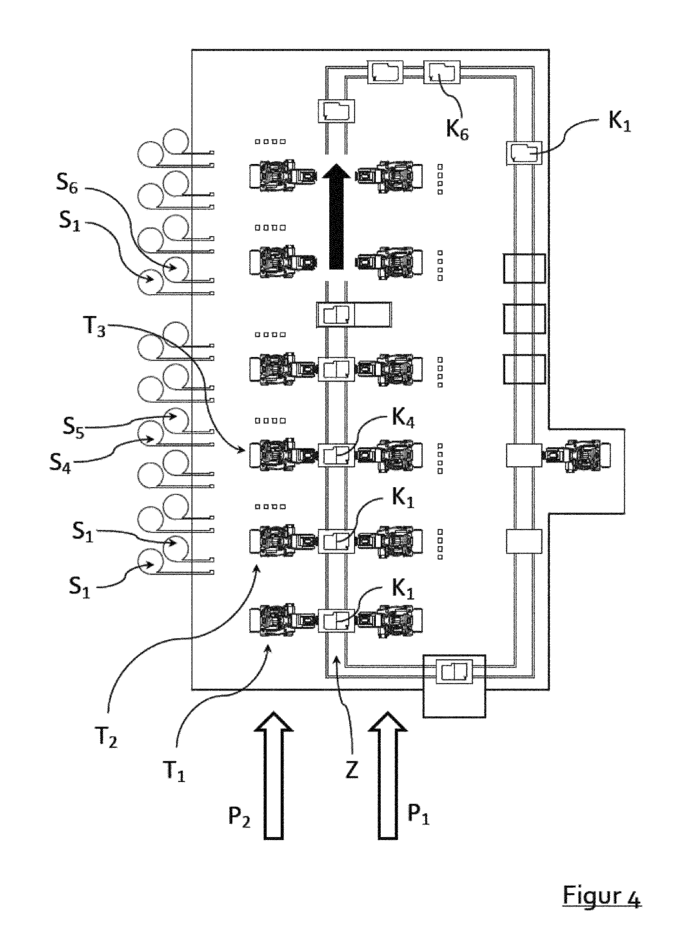

Fig. 4 zeigt in schematischer Draufsicht eine Fertigungsstraße mit mehreren Schweißsystemen (T₁, T₂, T₃...). Die Schweißsysteme sind längs eines Zubringers (Z) in einer Werkhalle angeordnet, wobei sich links vom Zubringer (Z) die jeweils zweiten Positioniereinheiten (P₂) eines jeden Schweißsystems T befinden, während sich auf der gegenüberliegenden rechten Seite des Zubringers (Z) die jeweils ersten Positioniereinheiten (P₁) befinden.

Im Bereich der jeweils zweiten Positioniereinheiten (P₂) befinden sich für die einzelnen Schweißsysteme (T₁, T₂, T₃ ...) jeweils Magazine, in denen jeweils unterschiedliche Schweißteile (S₁, S₂, S₃...) bereitgehalten werden (nicht alle Systeme, Schweißteile und Körper sind in Fig. 4 beziffert). Auch auf Seiten der jeweils ersten Positioniereinheiten sind nicht näher bezeichnete Magazine vorgesehen, aus denen die ersten Positioniereinheiten jeweils verschiedene Heizelemente aufgreifen und einsetzen können.

Mit dem Zubringer (Z) können gleiche oder auch unterschiedliche Körper (K₁, K₂...) den einzelnen Schweißsystemen (T₁, T₂, T₃ ...) zugeführt werden, um unterschiedlichste Schweißaufgaben zu erfüllen. So dienen die ersten beiden Schweißeinheiten (T₁ und T₂) beispielsweise dazu, an einem Körper (K₁) jeweils ein erstes Schweißteil (S₁) anzubringen. Die dritte Schweißeinheit (T₃) dagegen schweißt zwei Schweißteile (S₄ und S₅) an einen vom Körper K₁ verschiedenen Körper (K₄) an. Das nicht näher bezeichnete 5. Schweißsystem hält Schweißteile (S₁) und (S₆) bereit, um beispielsweise Körper (K₁) oder (K₆) wahlweise bestücken zu können.

Grundsätzlich vermag in dieser Fertigungsstraße jedes Schweißsystems verschiedene Schweißteile unter Nutzung verschiedener Heizelemente an verschiedenen Körpern anzuordnen und ist nicht auf einen bestimmten Körpertyp oder eine bestimmte Schweißverbindung festgelegt. Die Fertigungsstraße bzw. die darin eingesetzten Schweißsysteme sind daher auch für unterschiedliche oder aufeinanderfolgende Generationen von Fahrzeugen oder deren Fahrzeugtanks ohne nennenswerte Umrüstungen einsetzbar. Die Neuanschaffung individuell gestalteter Heizelementschweißeinheiten für jeweils neue Schweißaufgaben, wie sie im Stand der Technik üblich ist, kann damit nun entfallen.

## Patentansprüche

1. Verfahren zum Verschweißen von Kunststoffteilen, mit dem an die Kontur einer Verbindungsstelle (V) eines Körpers (K) ein Schweißteil (S) angeschweißt werden soll, das Verfahren umfassend folgende Schritte:
a) Positionierung eines Heizelements (H) an der Verbindungsstelle (V), um diese zu erwärmen,
b) Positionierung des Schweißteils (S) an der erwärmten Verbindungsstelle (V) zur Herstellung der Verschweißung,
**dadurch gekennzeichnet,**
c) **dass** die Positionierung des Heizelementes (H) erfolgt unter Berücksichtigung derjenigen Kräfte, welche dabei aus dem Andrücken des Heizelements (H) gegen den Körper (K) resultieren.

2. Verfahren nach Anspruch 1, **dadurch gekennzeichnet, dass** das Schweißteil (S) vor seiner Positionierung gemäß b) ebenfalls erwärmt wird, wobei die Erwärmung erfolgt durch Positionierung des Schweißteils (S) mit seiner zu erwärmenden Zone
i) an dem Heizelement (H), oder
ii) an einer separaten Heizvorrichtung.

3. Verfahren nach Anspruch 1 oder 2, **dadurch gekennzeichnet, dass** die Positionierung des Schweißteils (S) an der Verbindungsstelle (V) erfolgt unter Berücksichtigung derjenigen Kräfte, welche dabei aus dem Andrücken des Schweißteils (S) gegen den Körper (K) resultieren.

4. Verfahren nach Anspruch 1 oder 2, **dadurch gekennzeichnet, dass** das Heizelement (H) mittels einer ersten Positioniereinheit (P₁) und das Schweißteil (S) mittels einer von der Positioniereinheit (P₁) unabhängig bewegbaren zweiten Positioniereinheit (P₂) aufnehmbar und bewegbar ist.

5. Verfahren nach dem vorhergehenden Anspruch, **dadurch gekennzeichnet, dass** vor der Positionierung des Heizelements (H) gemäß Verfahrensschritt a) des Anspruchs 1 eine an der Positioniereinheit (P₂) zur temporären Aufnahme des Schweißteils (S) vorgesehene Haltevorrichtungen - vorzugsweise manuell - in eine Soll-Position bewegt wird, in der sie die Lage der Verbindungsstelle definiert.

6. Verfahren nach einem beiden der vorigen Ansprüche, **dadurch gekennzeichnet, dass** die beiden Positioniereinheiten (P₁, P₂) jeweils Mittel zur Erfassung von Kräften aufweisen, welche auf eine von ihnen aufgenommene Komponente, insbesondere ein Heizelement (H) oder ein Schweißteil (S₁, S₂...), einwirken, wobei diese Kräfte bei der Positionierung der Komponente an dem Körper (K) berücksichtigt werden.

7. Verfahren nach einem der vorigen Ansprüche, **dadurch gekennzeichnet, dass** vor der Positionierung des Heizelements (H) gemäß Verfahrensschritt a) die Lage der Kontur des Körpers (K) an der Verbindungsstelle (V) durch ein Positionserkennungssystem (D) erfasst und ausgewertet wird, um das Heizelement (H) für den Verfahrensschritt a) in Abhängigkeit der erfassten Kontur im Raum auszurichten.

8. Verfahren nach einem der vorigen Ansprüche, **dadurch gekennzeichnet, dass** die Positionierung des Schweißteils (S) gemäß Verfahrensschritt b) erfolgt unter Berücksichtigung von Korrekturdaten, welche ermittelt werden in Abhängigkeit
i) von einer räumlichen Lage des Heizelements (H₁) während Verfahrensschritt a) oder
ii) von der räumlichen Lage der Kontur des Körpers (K) an der Verbindungsstelle (V) vor oder nach Verfahrensschritt a).

9. Verfahren nach einem der vorigen Ansprüche, **dadurch gekennzeichnet, dass** wenigstens eine Steuereinheit die Bewegungen des Heizelements (H) und des Schweißteils (S) steuert in Abhängigkeit von der Steuereinheit zugeführten Daten, die Daten betreffend
i) die Lage der Kontur des Körpers (K) an der Verbindungsstelle (V), und/oder
ii) eine Lage des Heizelements (H) während Verfahrensschritt a), und/oder
iii) resultierende Kräfte an dem Schweißteil oder dem Heizelement, und/oder
iv) die Zeit, die Geschwindigkeiten, den zurückgelegten Weg oder die Positionen des Schweißteils oder des Heizelements.

10. Verfahren nach einem der vorigen Ansprüche, umfassend folgende Verfahrensschritte:
i) Erfassen der Lage der Kontur des Körpers (K) an der Verbindungsstelle (V) durch ein Positionserkennungssystem (D);
ii) Positionieren des Heizelements (H) an der Verbindungsstelle (V) mittels einer ersten Positioniereinheit (P₁) unter Anpassung der räumlichen Ausrichtung des Heizelements auf Basis der ermittelten Lage der Kontur an der Verbindungsstelle (V);
iii) Erfassen der vom Körper (K) auf das Heizelement (H) einwirkenden Kraft und Steuerung der weiteren Bewegung des Heizelements (H) in Abhängigkeit dieser Kraft, um eine ausreichend aufgewärmte und angeschmolzene Verbindungsstelle (V) an einer vorgebbaren Position am Körper (K) zu erreichen;
iv) Entfernen des Heizelements (H) von der Verbindungsstelle (V) und Positionierung des Schweißteils (S) mittels einer zweiten Positioniereinheit (P₂) an der Verbindungsstelle (V) unter Berücksichtigung von zuvor ermittelten Lagedaten der Verbindungsstelle (V);
v) Erfassen der vom Körper (K) auf das Schweißteil (S) einwirkenden Kraft und Steuerung der weiteren Bewegung des Schweißteils (S) in Abhängigkeit dieser Kraft, um die Schweißverbindung herzustellen,
wobei das Schweißteil (S) vor Schritt iv) an einer separaten Heizvorrichtung angeschmolzen wird.

11. Schweißsystem (T) zum Verschweißen von Kunststoffteilen, insbesondere nach einem der vorgenannten Verfahren, um damit an die Kontur einer Verbindungsstelle (V) eines Körpers (K) ein Schweißteil (S) anzuschweißen, das Schweißsystem umfassend
a) eine erste Positioniereinheit (P₁) zur Aufnahme und Positionierung wenigstens eines Heizelements (H), um mit dem Heizelement (H) die Verbindungsstelle (V) zu erwärmen,
b) eine von der ersten Positioniereinheit (P₁) unabhängig bewegbare zweite Positioniereinheit (P₂) zur Aufnahme und Positionierung wenigstens eines Schweißteils (S),
**dadurch gekennzeichnet,**
c) **dass** das Schweißsystem einen Kraftsensor (F₁) zur Ermittlung von Kräften aufweist, welche auf das Heizelements (H) einwirken und insbesondere aus dessen Kontakt mit dem Körper (K) resultieren, um die mit dem Kraftsensor (F₁) ermittelten Daten bei der Positionierung des Heizelements (H) berücksichtigen zu können.

12. Schweißsystem (T) nach dem vorigen Systemanspruch, **dadurch gekennzeichnet, dass** die zweite Positioniereinheit (P₂) einen Kraftsensor (F₂) zur Ermittlung von Kräften aufweist, welche auf das von der zweiten Positioniereinheit (P₂) gehaltene Schweißteil (S) einwirken, um die mit dem Kraftsensor (F₂) ermittelten Daten bei der Positionierung des Schweißteils (S) berücksichtigen zu können.

13. Schweißsystem (T) nach einem der vorigen Systemansprüche, **dadurch gekennzeichnet, dass** das Schweißsystem ein vorzugsweise an der ersten Positioniereinheit (P₁) angeordnetes Positionserkennungssystem (D) aufweist, mit dem die Lage der Kontur des Körpers (K) an der Verbindungsstelle (V) erfassbar und auswertbar ist, um das Heizelement (H) in Abhängigkeit der erfassten Kontur zur Erwärmung der Verbindungsstelle (V) im Raum auszurichten.

14. Schweißsystem (T) nach einem der vorigen Systemansprüche, **dadurch gekennzeichnet, dass**
i) die erste Positioniereinheit (P₁) zur Aufnahme mehrerer Heizelemente (H₁, H₂, H₃...) ausgebildet ist, um diese zur Erwärmung des Körpers wahlweise an unterschiedlichen Verbindungsstelle (V) zu positionieren, und/oder
iii) dass die zweite Positioniereinheit (P₂) zur Aufnahme mehrerer, vorzugsweise unterschiedlicher Schweißteile (S₁, S₂, S₃...) ausgebildet ist, um diese wahlweise an unterschiedlichen Verbindungsstellen (V₁, V₂, V₃...) des Körpers (K) zu positionieren.

15. Schweißsystem (T) nach einem der vorigen Systemansprüche, **dadurch gekennzeichnet, dass** die beiden Positioniereinheiten (P₁, P₂) miteinander oder mit einer Steuereinheit in direktem oder indirektem Signalaustausch stehen, um die Bewegungen von Heizelement (H) und Schweißteil (S) in Abhängigkeit von Daten der jeweils anderen Positioniereinheit (P₁, P₂), von Kraftsensoren (F₁, F₂) oder von einem Positionserkennungssystem (D) zu steuern.

16. Schweißsystem (T) nach einem der vorigen Systemansprüche, **dadurch gekennzeichnet, dass** eine zum Heizelement (H) separate Heizvorrichtung vorgesehen ist, um eine Zone des Schweißteils (S) durch Positionierung mittels der zweiten Positioniereinheit (P₂) an der separaten Heizvorrichtung zu erwärmen.

17. Fertigungsstraße mit mehreren Schweißsystemen (Tₐ, T_{b}, T_{c}...) nach einem der vorigen Ansprüche, mit einem Zubringer (Z), um den einzelnen Schweißsystemen (Tₐ, T_{b}, T_{c}...) identische oder verschiedene Körper (K₁, K₂, K₃...) zuzuführen, um an unterschiedlichen Schweißsystemen (Tₐ, T_{b}, T_{c}...) nacheinander oder gleichzeitig gleiche oder unterschiedliche Schweißteile (S₁, S₂, S₃...) an gleichen oder unterschiedlichen Verbindungsstellen (V₁, V₂, V₃...) der Körper (K₁, K₂, K₃...) anzuschweißen.
